# EUROPÄISCHE PATENTSCHRIFT

(11) **EP 3 838 676 B1**
(45) Veröffentlichungstag und Bekanntmachung des Hinweises auf die Patenterteilung: **26.10.2022**
(21) Anmeldenummer: 20215037.1
(22) Anmeldetag: 17.12.2020
(51) Int. Cl.: B60R 7/04

(54) **SCHLIESSEINHEIT FÜR EIN ABLAGEFACH, ABLAGEFACH**
STORAGE COMPARTMENT AND CLOSING UNIT FOR A STORAGE COMPARTMENT
UNITÉ DE FERMETURE POUR UN COMPARTIMENT DE DÉPÔT, COMPARTIMENT DE DÉPÔT

(30) Priorität: 20.12.2019 DE 102019220345
(43) Veröffentlichungstag der Anmeldung: 23.06.2021
(73) Patentinhaber: Volkswagen Aktiengesellschaft, 38440 Wolfsburg (DE)
(72) Erfinder: STOCK, Christian, 38448 Wolfsburg (DE); NEUMANN, Christopher, 38553 Wasbüttel (DE); GIS, Burkhard, 38471 Rühen (DE)
(74) Vertreter: Clarenbach, Carl-Philipp

(56) Entgegenhaltungen:
- DE-A1-102015 113 395
- DE-A1-102018 102 625
- US-A1- 2005 189 776
- US-A1- 2018 118 121

## Beschreibung

Die Erfindung betrifft eine Schließeinheit für ein Ablagefach, insbesondere eines Kraftfahrzeugs, mit einem Rahmen, der eine Zugangsöffnung für das Ablagefach bildet, mit zwei an dem Rahmen verlagerbar angeordneten Schließelementen, wobei die Schließelemente jeweils in einer Schließstellung jeweils einen anderen Teil der Zugangsöffnung verschließen und zusammen in ihrer jeweiligen Schließstellung die gesamte Zugangsöffnung verschließen, und wobei an den einander zugewandten Enden der Schließelemente jeweils eine Handhabe zum manuellen Verschieben der Schließelemente angeordnet ist.

Weiterhin betrifft die Erfindung ein Ablagefach für ein Kraftfahrzeug, mit einer Aufnahmewanne für Gegenstände und mit einer der Aufnahmewanne zugeordneten Schließeinheit zum Freigeben oder Verschließen der Aufnahmewanne.

Schließeinheiten der eingangs genannten Art sind aus dem Stand der Technik bekannt. So offenbart beispielsweise die Offenlegungsschrift US 2018/0118121 A1 eine gattungsgemäße Schließeinheit für ein Ablagefach in einer Mittelarmlehne eines Kraftfahrzeugs. Die Schließelemente sind dabei als flexible Rollos ausgebildet und weisen an ihnen einander zugewandten Enden jeweils eine Handhabe auf. Die Schließelemente sind unabhängig voneinander in dem Rahmen verschiebbar gelagert, um jeweils einen Abschnitt der Rahmenöffnung beziehungsweise der Zugangsöffnung freizugeben oder zu verschließen, wobei die freien Enden auch derart gegeneinander geschoben werden können, dass durch die beiden Schließelemente die gesamte Zugangsöffnung verschlossen ist. Der Benutzer hat damit die Möglichkeit, auf einfache Art und Weise nur einen Teil des Ablagefachs freizugeben oder bei Bedarf das gesamte Ablagefach freizugeben oder zu verschließen.

Aus der Offenlegungsschrift DE 198 56 979 A1 ist des Weiteren ein Ablagefach mit einer Schließeinheit bekannt, welche ebenfalls zwei unabhängig voneinander verschiebbare Schließelemente aufweist. Den beiden Schließelementen ist jedoch nur eine Handhabe zugeordnet, die wahlweise mit dem einen oder mit dem anderen Schließelement koppelbar ist. Die Offenlegungsschrift US 2005/0189776 A1 offenbart eine weitere Schließeinheit für ein Ablagefach eines Kraftfahrzeugs.

Der Erfindung liegt die Aufgabe zugrunde, eine verbesserte Schließeinheit für ein Ablagefach zu schaffen, die eine einfache und intuitive Handhabe der Schließelemente erlaubt und gleichzeitig bauraumsparend und optisch hochwertig ist.

Die der Erfindung zugrundeliegende Aufgabe wird durch eine Schließeinheit mit den Merkmalen des Anspruchs 1 gelöst. Diese hat den Vorteil, dass obwohl jedes Schließelement mit einer eigenen Handhabe versehen ist, die Handhaben in der Schließstellung beider Schließelemente visuell in der Art einer einzigen Handhabe wirken. Im geschlossenen Zustand der Schließeinheit ergibt sich somit für den Benutzer zunächst der optische Eindruck einer einzigen Handhabe, es wird jedoch auf ein individuelles Koppeln der Handhabe mit dem einen oder mit dem anderen Schließelement verzichtet, stattdessen sind tatsächlich zwei Handhaben verfügbar. Dadurch ist zum einen die Robustheit der Schließeinheit erhöht, der optische Eindruck verbessert und gleichzeitig eine einfache Bedienbarkeit beider Schließelemente gewährleistet. Erfindungsgemäß wird dies dadurch erreicht, dass die Schließelemente an ihren einander zugewandten Enden jeweils einen, insbesondere in Bezug auf eine Längsmittelachse der Schließelemente, außermittig liegenden Vorsprung aufweisen, an welchem die jeweilige Handhabe angeordnet ist, derart, dass diese Handhaben in der Schließstellung beider Schließelemente in einer Linie quer zur Schieberichtung beziehungsweise Längsmittelachse angeordnet sind. Durch den jeweils außermittig liegenden Vorsprung wird erreicht, dass die Schließelemente mit den Handhaben sich bereichsweise seitlich überlappen, wenn sich beide Schließelemente in ihrer Schließstellung befinden. Dadurch können die Handhaben auf die gleiche Höhe, bezogen auf die Längsmittelachse des Rahmens, geschoben werden und visuell eine Handhabe bilden, die sich quer zur Längsmittelachse der Schließeinheit erstreckt.

Weiterhin ist bevorzugt vorgesehen, dass die Schließelemente in der gleichen Ebene verschiebbar gelagert sind. Damit bilden die Schließelemente in der Geschlossenstellung eine durchgehende Abdeckung für das Ablagefach, und nutzen insbesondere auch das gleiche Führungssystem an dem Rahmen, sodass eine bauraumsparende und kostensparende Realisierung der Schließeinheit gewährleistet ist.

Besonders bevorzugt erstreckt sich der jeweilige Vorsprung in Verlängerung des jeweiligen Schließelements in Richtung des gegenüberliegenden Schließelements. Dadurch liegen die Handhaben in der Schließstellung beider Schließelemente nebeneinander beziehungsweise, wie zuvor bereits beschrieben, auf einer Höhe bezogen auf die Längsmittelachse der Schließeinheit. Optional steht der jeweilige Vorsprung außerdem von dem jeweiligen Schließelement in der Höhe derart vor, dass er in der Schließstellung das jeweils andere Schließelement überdeckt, sodass die Vorsprünge über das jeweils andere Schließelement geschoben werden können, um dann in einer gemeinsamen Linie zu liegen. Alternativ erstreckt sich der jeweilige Vorsprung nur in Verlängerung des jeweiligen Schließelements, sodass die Vorsprünge der Schließelemente in der Schließstellung beider Schließelemente nur nebeneinanderliegen und den Raum zwischen den Schließelementen, insbesondere vollständig, ausfüllen, um die Schließeinheit vollständig zu verschließen.

Weiterhin ist bevorzugt vorgesehen, dass die jeweilige Handhabe als stegförmige Griffleiste auf dem jeweiligen Vorsprung angeordnet oder ausgebildet ist. Die Griffleiste ist einfach herstellbar und erlaubt eine einfache Bedienung der Schließelemente. Insbesondere ist die Griffleiste vorteilhaft ausrichtbar, sodass sich eine optisch durchgehende Handhabe in der Schließstellung beider Schließelemente ergibt. Alternativ ist die jeweilige Handhabe bevorzugt als längserstreckte Griffmulde ausgebildet.

Besonders bevorzugt ist das jeweilige Schließelement als Rollo ausgebildet. Dadurch ergibt sich eine einfache Verwahrung des Schließelements in dessen Offenstellung, sodass sich Bauraumvorteile ergeben. Alternativ ist das jeweilige Schließelement bevorzugt als verschiebbarer oder verschwenkbarer und/oder verschiebbarer Deckel ausgebildet.

Besonders bevorzugt weist der Rahmen zwei einander gegenüberliegende Führungsnuten auf, in welchen die Schließelemente mit ihren Seitenrändern jeweils geführt gelagert sind. Dadurch ergibt sich eine einfache und sichere Führung der Schließelemente in einer Ebene, insbesondere auch dann, wenn diese als Rollo ausgebildet sind.

Bevorzugt sind die Schließelemente an einander zugewandten Stirnseiten zum Ausbilden einer geschlossenen Fuge komplementär zueinander ausgebildet. Das bedeutet, dass im zusammengeschobenen Zustand der Schließelemente in deren jeweiligen Schließstellung ein blickdichtes Verschließen des gesamten Ablagefachs gewährleistet ist. Durch die komplementäre Ausbildung ist einfach realisiert, dass im zusammengeschobenen Zustand ein Lichtspalt zwischen den Schließelementen in der jeweiligen Schließstellung verhindert ist.

Besonders bevorzugt ist dazu vorgesehen, dass das eine Schließelement eine zumindest bereichsweise konkav ausgebildete Stirnseite und das andere Schließelement eine der konkav ausgebildeten Stirnseite zugeordnete, zumindest bereichsweise konvex ausgebildete Stirnseite aufweist. Im zusammengeschobenen Zustand liegt somit die konvex ausgebildete Stirnseite bereichsweise in der konkav ausgebildeten Stirnseite ein, wodurch ein Lichtspalt vorteilhaft vermieden ist. Weiterhin ist bevorzugt vorgesehen, dass die Vorsprünge einstückig mit dem jeweiligen Schließelement ausgebildet sind. Dadurch ergibt sich eine einfache und robuste Ausbildung der Schließeinheit.

Alternativ sind die Handhaben an dem jeweiligen Vorsprung als separate Bauteile befestigt. Dadurch ist eine einfache optische Anpassung der Handhaben an beispielsweise unterschiedliche Kraftfahrzeuge oder unterschiedliche Kraftfahrzeugausstattungen möglich.

Das erfindungsgemäße Ablagefach mit den Merkmalen des Anspruchs 12 zeichnet sich durch die erfindungsgemäße Ausbildung der Schließeinheit aus. Es ergeben sich dadurch die bereits genannten Vorteile.

Vorzugsweise sind die Schließelemente an dem Rahmen unabhängig voneinander verlagerbar, sodass das eine Schließelement beispielsweise in die Offenstellung verschoben werden kann, während das andere Schließelement in der Schließstellung verbleibt. Gemäß einer alternativen Ausführungsform sind die Schließelemente insbesondere mechanisch miteinander derart gekoppelt, dass das Verlagern eines der Schließelemente auch zu einer Verlagerung des anderen der Schließelemente führt. Dadurch ist die Zugangsöffnung des Ablagefachs durch das Betätigen nur eines der Schließelemente einfach vollständig freigebbar und verschließbar.

Weitere Vorteile und bevorzugte Merkmale und Merkmalskombinationen ergeben sich insbesondere aus dem zuvor Beschriebenen sowie aus den Ansprüchen. Im Folgenden soll die Erfindung anhand der Zeichnungen näher erläutert werden. Dazu zeigen
- Figur 1: ein vorteilhaftes Ablagefach in einer perspektivischen Darstellung,
- Figur 2: eine Draufsicht auf das Ablagefach,
- Figur 3: eine erste Längsschnittdarstellung durch die Schließeinheit, und
- Figur 4: eine zweite Längsschnittdarstellung durch die Schließeinheit.

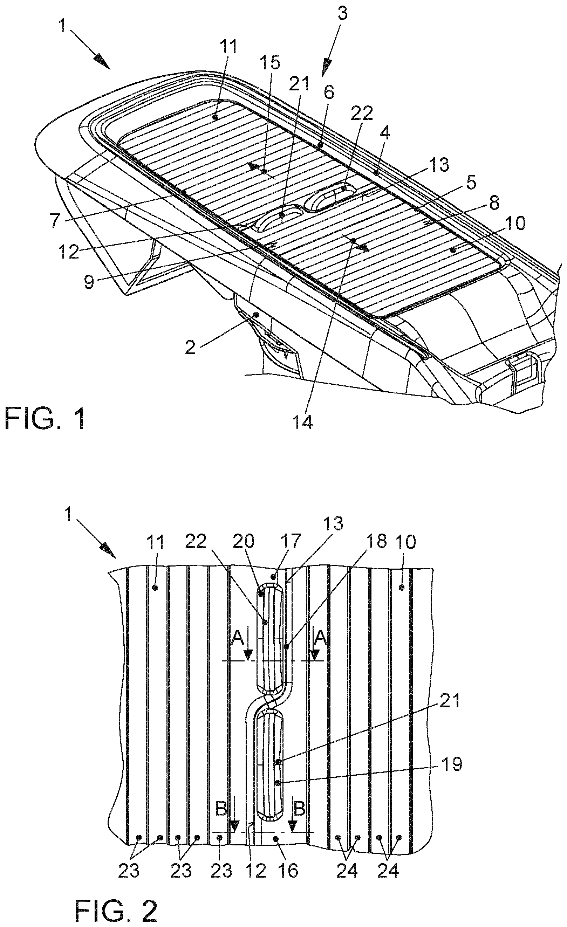

Figur 1 zeigt in einer perspektivischen Darstellung ein vorteilhaftes Ablagefach 1 für ein Kraftfahrzeug, insbesondere für eine Mittelkonsole eines Kraftfahrzeugs. Das Ablagefach 1 weist eine Aufnahmewanne 2 zur Aufnahme und Aufbewahrung von Gegenständen auf, wobei die Aufnahmewanne 2 im bestimmungsgemäß montierten Zustand nach oben hin offen ausgebildet ist. Dieser Öffnung ist eine Schließeinheit 3 zugeordnet, mittels welcher ein Zugang zu der Aufnahmewanne 2 freigegeben oder verschlossen werden kann. Dazu weist die Schließeinheit 3 einen Rahmen 4 auf, der auf Seitenrändern der Aufnahmewanne 2 aufliegt. Der Rahmen 4 bildet eine Zugangsöffnung 5 zu der Aufnahmewanne 2 aus. Dabei weist der Rahmen 5 an zwei einander gegenüberliegenden Längsseiten 6 und 7 jeweils eine Führungsnut 8, 9 auf, wobei die Führungsnuten 8, 9 parallel zueinander ausgerichtet sind. Die Schließeinheit 3 weist weiterhin zwei Schließelemente 10, 11 auf, die jeweils als Rollos ausgebildet sind. Die Schließelemente 10, 11 sind mit ihren Seitenrändern in jeweils einer der Führungsnuten 8, 9 derart verschiebbar gelagert, dass sie gemeinsam die Zugangsöffnung 5 vollständig verschließen können, wie in Figur 1 gezeigt. In diesem Zustand sind beide Schließelemente 10, 11 derart in den Führungsnuten 8, 9 verschoben, dass sie mit ihren einander zugewandten Stirnseiten 12, 13 aneinander anliegen und jeweils einen Abschnitt der Zugangsöffnung 5 beziehungsweise des Ablagefachs 1 verschließen. Werden die Schließelemente 10, 11 voneinander wegbewegt, wie durch Pfeile 14, 15 angezeigt, so wird die Zugangsöffnung 5 geöffnet und das Ablagefach 1 freigegeben. Die Schließelemente 10, 11 sind dabei unabhängig voneinander verschiebbar. Durch die Führungsnuten 8, 9 sind die Schließelemente 10, 11 in dem Rahmen 4 vorzugsweise in einer gemeinsamen Ebene angeordnet beziehungsweise ausgerichtet, sodass sie auf einer Höhe zueinander liegen und im geschlossenen Zustand, wie in Figur 1 gezeigt, eine zumindest im Wesentlichen durchgehende Oberfläche bilden.

Figur 2 zeigt eine Draufsicht auf das Ablagefach 1 im Bereich der Stirnseiten 12, 13 der Schließelemente 10, 11. Beide Schließelemente 10, 11 weisen einen Vorsprung 16, 17 auf, der sich in Verlängerung des jeweiligen Schließelements 10, 11 erstreckt.

Die Vorsprünge 16, 17 erstrecken sich somit in der Ebene der Führungsnuten 8, 9 und jeweils in Richtung des gegenüberliegenden Schließelements 11, 10. Dabei sind die Vorsprünge 16, 17 komplementär zueinander ausgebildet, sodass die Schließelemente 10, 11 in der gezeigten Schließstellung die Zugangsöffnung 5 vollständig verschließen und über die gesamte Breite aneinander anliegen. Es ergibt sich somit eine durchgehend geschlossene Fuge 18.

Jeder Vorsprung 16, 17 weist jeweils eine Handhabe 19, 20 auf. Die Handhaben sind gemäß einem vorliegenden Ausführungsbeispiel als stegförmige Griffleisten 21 beziehungsweise 22 ausgebildet, die von dem jeweiligen Schließelement 10, 11 senkrecht vorstehen, und zwar auf der von der Aufnahmewanne 2 abgewandten Oberseite der Schließelemente 10, 11. Die Griffleisten 21, 22 sind dabei derart an den Vorsprüngen 16, 17 angeordnet, dass sie in der geschlossenen Stellung der Schließelemente 10, 11 in einer geraden Linie zueinander ausgerichtet sind. Die Fuge 18 verläuft dabei bevorzugt, wie in Figur 2 gezeigt, zwischen den beiden Griffleisten 21, 22 hindurch.

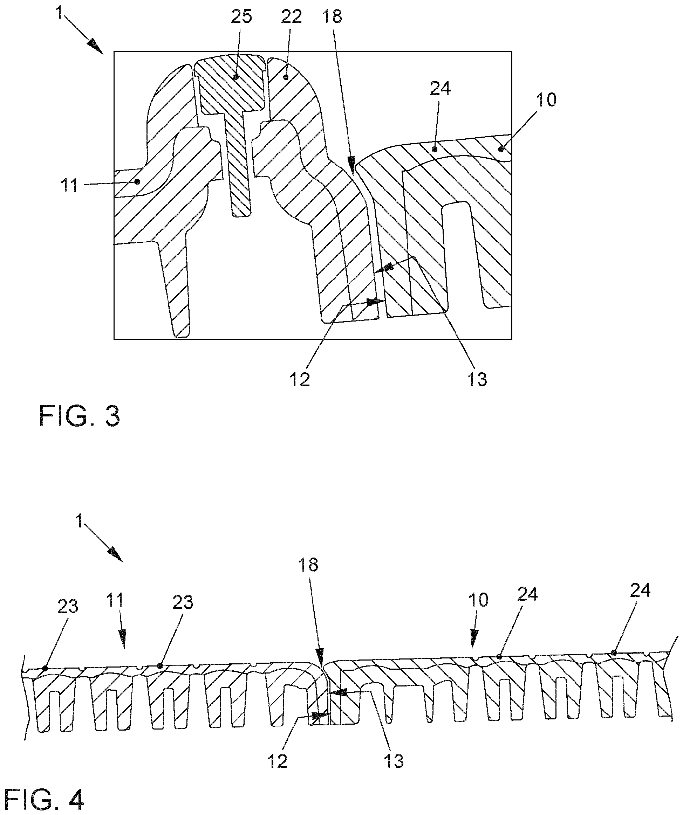

Figur 3 zeigt eine Längsschnittdarstellung durch die Schließeinheit 3 entlang der Linie A-A aus Figur 2. Im Bereich der Fuge 18 sind die zueinander zugewandten Stirnseiten 12 und 13 derart komplementär zueinander ausgebildet, dass eine undurchsichtige Fuge entsteht, sodass also von außen nicht in das Ablagefach gesehen werden kann, wenn die Schließelemente 11, 10 sich beide in der Schließstellung, wie in Figur 1 gezeigt, befinden. Dazu ist die Stirnseite 13 des Schließelements 11 bereichsweise konvex ausgebildet und die Stirnseite 12 des Schließelements 10 komplementär dazu bereichsweise konkav, sodass die Schließelemente 10, 11 sich in der Schließstellung beider Schließelemente 10, 11 bereichsweise überlappen, sodass eine Sichtfuge verhindert und ein Lichteinfall oder -ausfall zumindest weitestgehend verändert ist.

Figur 4 zeigt ebenfalls eine Längsschnittdarstellung durch die Schließeinheit 3, jedoch entlang der Linie B-B aus Figur 2. Auch hier ist die komplementäre Ausbildung der Stirnseiten 12, 13 zueinander erkennbar. Ebenso wie die Ausbildung der Schließelemente als Rollo, die mehrere flexibel miteinander verbundene Lamellen 23 beziehungsweise 24 aufweisen, die ein Zusammenrollen des jeweiligen Schließelements 10, 11 beabstandet zu der Zugangsöffnung 5 ermöglichen.

Wie in Figur 3 außerdem gezeigt, sind die Griffleisten 21, 22 optional mit einem Einsatzelement 25 ausgebildet, das insbesondere als Lichtleiter oder als Leuchtmittel ausgebildet ist, mittels dessen die jeweilige Handhabe 19, 20 beleuchtbar ist, um beispielsweise dem Benutzer im Dunkeln das Erfassen der jeweiligen Handhabe zu erleichtern.

Während gemäß dem vorliegenden Ausführungsbeispiel die Vorsprünge 16, 17 sich jeweils nur in Verlängerung des jeweiligen Schließelements 10, 11 erstrecken, sodass die Vorsprünge 16, 17 der Schließelemente 10, 11 in der Schließstellung beider Schließelemente 10, 11 nur nebeneinanderliegen, also an den Endkanten stirnseitig aneinander anliegen, ist gemäß einem weiteren Ausführungsbeispiel vorgesehen, dass der jeweilige Vorsprung 16, 17 außerdem von dem jeweiligen Schließelement 10, 11 in der Höhe derart vorsteht, dass er in der Schließstellung beider Schließelemente 10, 11 das jeweils andere Schließelement 11, 10 überdeckt. Dadurch können die Vorsprünge 16, 17 über das jeweils andere Schließelement 11, 10 beim Verbringen der Schließelemente in die Schließstellung geschoben werden, um dann in einer gemeinsamen Linie zu liegen. Die Schließelemente überlappen sich dadurch gegenseitig in der Schließstellung.

Durch die vorteilhafte Ausbildung der Schließeinheit 3 wird erreicht, dass der Benutzer das Ablagefach 1 bei Bedarf durch Verschieben nur eines der Schließelemente 10, 11 in eine Offenstellung bereichsweise freigeben kann. Darüber hinaus ist ein hochwertiger Eindruck gegeben, weil die Griffleisten 21, 22 sich in einer Linie quer zur Schieberichtung erstrecken und dadurch zunächst in der Schließstellung beider Schließelemente 10, 11 wie ein einziger Betätigungsgriff wirken. Durch die vorteilhafte Ausbildung der Schließelemente 10, 11 wird eine geschlossene Fuge beziehungsweise ein dichtes Verschließen der Zugangsöffnung 5 ermöglicht und eine kostengünstige und robuste Realisierung der Schließeinheit 2 geboten.

### Bezugszeichenliste

- 1: Ablagefach
- 2: Aufnahmewanne
- 3: Schließeinheit
- 4: Rahmen
- 5: Zugangsöffnung
- 6: Längsseite
- 7: Längsseite
- 8: Führungsnut
- 9: Führungsnut
- 10: Schließelement
- 11: Schließelement
- 12: Stirnseite
- 13: Stirnseite
- 14: Pfeil
- 15: Pfeil
- 16: Vorsprung
- 17: Vorsprung
- 18: Fuge
- 19: Handhabe
- 20: Handhabe
- 21: Griffleiste
- 22: Griffleiste
- 23: Lamelle
- 24: Lamelle
- 25: Einsatzelement

## Patentansprüche

1. Schließeinheit (3) für ein Ablagefach (1), insbesondere eines Kraftfahrzeugs, mit einem Rahmen (4), der eine Zugangsöffnung (5) für das Ablagefach (1) bildet, mit zwei an dem Rahmen (4) verlagerbar angeordneten Schließelementen (10,11), wobei die Schließelemente (10,11) jeweils in einer Schließstellung jeweils einen anderen Teil der Zugangsöffnung (5) verschließen und zusammen in ihrer jeweiligen Schließstellung die gesamte Zugangsöffnung (5) verschließen, und wobei an den einander zugewandten Enden der Schließelemente (10,11) jeweils eine Handhabe (19,20) zum manuellen Verschieben der Schließelemente (10,11) angeordnet ist, **dadurch gekennzeichnet, dass** die Schließelemente (10,11) an ihren einander zugewandten Enden jeweils einen außermittig liegenden Vorsprung (16,17) aufweisen, an welchem die jeweilige Handhabe (19,20) angeordnet ist, derart dass die Handhaben (19,20) in der Schließstellung beider Schließelemente (10,11) in einer Linie quer zur Schieberichtung der Schließelemente (10,11) angeordnet sind.

2. Schließeinheit nach dem vorhergehenden Anspruch, **dadurch gekennzeichnet, dass** die Schließelemente (10,11) in der gleichen Ebene verschiebbar gelagert sind.

3. Schließeinheit nach einem der vorhergehenden Ansprüche, **dadurch gekennzeichnet, dass** sich der jeweilige Vorsprung (16,17) in Verlängerung des jeweiligen Schließelements (10,11) in Richtung des gegenüberliegenden Schließelements (11,10) erstreckt.

4. Schließeinheit nach einem der vorhergehenden Ansprüche, **dadurch gekennzeichnet, dass** sich der jeweilige Vorsprung (16,17) nur in Verlängerung des jeweiligen Schließelements (11,10) erstreckt.

5. Schließeinheit nach einem der Ansprüche 1 bis 3, **dadurch gekennzeichnet, dass** der jeweilige Vorsprung (16,17) von dem jeweiligen Schließelement (11,10) in der Höhe derart vorsteht, dass er in der Schließstellung das jeweils andere Schließelement (11,10) überdeckt.

6. Schließeinheit nach einem der vorhergehenden Ansprüche, **dadurch gekennzeichnet, dass** die jeweilige Handhabe (19,20) als stegförmige Griffleiste (21,22) oder als längserstreckte Griffmulde auf oder in dem jeweiligen Vorsprung (16,17) angeordnet oder ausgebildet ist.

7. Schließeinheit nach einem der vorhergehenden Ansprüche, **dadurch gekennzeichnet, dass** das jeweilige Schließelement (10,11) als Rollo oder als Deckel ausgebildet ist.

8. Schließeinheit nach einem der vorhergehenden Ansprüche, **dadurch gekennzeichnet, dass** der Rahmen (4) zwei einander gegenüberliegende Führungsnuten (8,9) aufweist, in welchen die Schließelemente (10,11) mit ihren Seitenrändern geführt gelagert sind.

9. Schließeinheit nach einem der vorhergehenden Ansprüche, **dadurch gekennzeichnet, dass** die Schließelemente (10,11) an einander zugewandten Stirnseiten (12,13) zum Ausbilden einer geschlossenen Fuge komplementär zueinander ausgebildet sind.

10. Schließeinheit nach einem der vorhergehenden Ansprüche, **dadurch gekennzeichnet, dass** das eine Schließelement (10) eine zumindest bereichsweise konkav ausgebildete Stirnseite (12) aufweist und das andere Schließelement (11) eine der konkav ausgebildeten Stirnseite (12) zugeordnete, zumindest bereichsweise konvex ausgebildete Stirnseite (13) aufweist.

11. Schließeinheit nach einem der vorhergehenden Ansprüche, **dadurch gekennzeichnet, dass** die Vorsprünge (16,17) einstückig mit dem jeweiligen Schließelement (10,11) ausgebildet sind.

12. Schließeinheit nach einem der Ansprüche 1 bis 11, **dadurch gekennzeichnet, dass** die Handhaben (19,20) einstückig mit dem jeweiligen Vorsprung (16, 17) ausgebildet sind.

13. Schließeinheit nach einem der Ansprüche 1 bis 11, **dadurch gekennzeichnet, dass** die Handhaben (19,20) an dem jeweiligen Vorsprung (16,17) als separate Bauteile befestigt sind.

14. Schließeinheit nach einem der vorhergehenden Ansprüche, **dadurch gekennzeichnet, dass** die Schließelemente (10,11) an dem Rahmen (4) unabhängig voneinander verlagerbar angeordnet sind.

15. Ablagefach (1) für ein Kraftfahrzeug, mit einer Aufnahmewanne (2) für Gegenstände und mit einer der Aufnahmewanne (2) zugeordneten Schließeinheit (3) zum Freigeben oder Verschließen der Aufnahmewanne (2), **gekennzeichnet durch** die Ausbildung der Schließeinheit (3) gemäß einem der vorhergehenden Ansprüche.

## Claims

1. A closing unit (3) for a storage compartment (1), in particular of a motor vehicle, comprising a frame (4) that forms an access opening (5) for the storage compartment (1), comprising two closing elements (10, 11) arranged displaceably on the frame (4), wherein the closing elements (10, 11) each close a different part of the access opening (5) in a closed position and close together, in their respective closed position, the entire access opening (5), and wherein a handle (19, 20) for manual displacement of the closing elements (10, 11) is arranged on the mutually facing ends of the closing elements (10, 11) in each case, **characterized in that** the closing elements (10, 11) each have an off-center projection (16, 17) at their mutually facing ends, on which projection the respective handle (19, 20) is arranged such that the handles (19, 20) are arranged in a line transversely to the sliding direction of the closing elements (10, 11), in the closed position of both closing elements (10, 11).

2. The closing unit according to the preceding claim, **characterized in that** the closing elements (10, 11) are mounted displaceably in the same plane.

3. The closing unit according to either of the preceding claims, **characterized in that** the respective projection (16, 17) extends in the extension of the respective closing element (10, 11) in the direction of the opposite closing element (11, 10).

4. The closing unit according to any of the preceding claims,
**characterized in that** the respective projection (16, 17) extends only in the extension of the respective closing element (11, 10).

5. The closing unit according to any of claims 1 to 3, **characterized in that** the respective projection (16, 17) protrudes from the respective closing element (11, 10) at a height such that it covers the respective other closing element (11, 10) in the closed position.

6. The closing unit according to any of the preceding claims,
**characterized in that** the respective handle (19, 20) is arranged or formed as a strut-shaped handle strip (21, 22) or as a longitudinally extending recessed handle, on or in the respective projection (16, 17).

7. The closing unit according to any of the preceding claims,
**characterized in that** the respective closing element (10, 11) is designed as a roller blind or as a cover.

8. The c losing unit according to any of the preceding claims,
**characterized in that** the frame (4) has two mutually opposing guide grooves (8, 9) in which the closing elements (10, 11) are mounted in a guided manner by the side edges thereof.

9. The closing unit according to any of the preceding claims,
**characterized in that** the closing elements (10, 11) are formed complementary to one another on mutually facing end faces (12, 13) for forming a closed joint.

10. The closing unit according to any of the preceding claims,
**characterized in that** one closing element (10) has an end face (12) that is concave at least in regions, and the other closing element (11) has an end face (13) that is assigned to the concavely formed end face (12) and is convex at least in regions.

11. The closing unit according to any of the preceding claims,
**characterized in that** the projections (16, 17) are formed integrally with the respective closing element (10, 11).

12. The closing unit according to any of claims 1 to 11, **characterized in that** the handles (19, 20) are formed integrally with the respective projection (16, 17).

13. The closing unit according to any of claims 1 to 11, **characterized in that** the handles (19, 20) are fastened to the respective projection (16, 17) as separate components.

14. The closing unit according to any of the preceding claims, **characterized in that** the closing elements (10, 11) are arranged on the frame (4) so as to be displaceable independently of one another.

15. A storage compartment (1) for a motor vehicle, comprising a receiving trough (2) for objects and comprising a closing unit (3) assigned to the receiving trough (2) for releasing or closing the receiving trough (2), **characterized by** the formation of the closing unit (3) according to any of the preceding claims.

## Revendications

1. Unité de fermeture (3) pour un compartiment de stockage (1), en particulier d'un véhicule automobile, comprenant un cadre (4), qui forme une ouverture d'accès (5) pour le compartiment de stockage (1), avec deux éléments de fermeture (10,11) agencés mobiles sur le cadre (4), dans laquelle les éléments de fermeture (10,11) ferment chacun dans une position de fermeture respectivement une autre partie de l'ouverture d'accès (5) et, conjointement dans leur position de fermeture respective, ferment la totalité de l'ouverture d'accès (5) et dans laquelle, au niveau des extrémités en regard des éléments de fermeture (10, 11), une poignée (19,20) respective est agencée pour le déplacement manuel des éléments de fermeture (10,11), **caractérisée en ce que** les éléments de fermeture (10,11), au niveau de leurs extrémités en regard, présentent respectivement une saillie (16,17) en position excentrée, au niveau de laquelle la poignée (19,20) respective est agencée, de sorte que les poignées (19,20) soient agencées dans la position de fermeture des deux éléments de fermeture (10,11) selon une ligne transversale à la direction de déplacement des éléments de fermeture (10,11).

2. Unité de fermeture selon la revendication précédente,
**caractérisée en ce que** les éléments de fermeture (10,11) sont placés mobiles dans le même plan.

3. Unité de fermeture selon l'une quelconque des revendications précédentes, **caractérisée en ce que** la saillie (16,17) respective s'étend dans le prolongement de l'élément de fermeture (10,11) respectif dans la direction de l'élément de fermeture (11,10) opposé.

4. Unité de fermeture selon l'une quelconque des revendications précédentes, **caractérisée en ce que** la saillie (16,17) respective s'étend uniquement dans le prolongement de l'élément de fermeture (11,10).

5. Unité de fermeture selon l'une quelconque des revendications 1 à 3, **caractérisée en ce que** la saillie (16,17) respective dépasse de l'élément de fermeture (11,10) respectif en hauteur de manière à recouvrir l'autre élément de fermeture (11,10) respectif dans la position de fermeture.

6. Unité de fermeture selon l'une quelconque des revendications précédentes, **caractérisée en ce que** la poignée (19,20) respective est agencée ou conçue comme une barre de préhension (21,22) en forme de barrette ou comme un creux de prise oblong sur ou dans la saillie (16,17) respective.

7. Unité de fermeture selon l'une quelconque des revendications précédentes, **caractérisée en ce que** l'élément de fermeture (10,11) respectif est conçu comme un store ou comme un couvercle.

8. Unité de fermeture selon l'une quelconque des revendications précédentes, **caractérisée en ce que** le cadre (4) présente deux rainures de guidage (8,9) opposées l'une à l'autre, dans lesquelles les éléments de fermeture (10,11) sont placés, guidés par leurs bords latéraux.

9. Unité de fermeture selon l'une quelconque des revendications précédentes, **caractérisée en ce que** les éléments de fermeture (10,11) sont conçus de manière complémentaire au niveau de faces avant (12,13) en regard pour former un joint fermé.

10. Unité de fermeture selon l'une quelconque des revendications précédentes, **caractérisée en ce qu'**un élément de fermeture (10) présente une face avant (12) conçue concave au moins par zones et l'autre élément de fermeture (11) présente une face avant (13) conçue convexe au moins par zones, associée à la face avant (12) conçue concave.

11. Unité de fermeture selon l'une quelconque des revendications précédentes, **caractérisée en ce que** les saillies (16,17) sont conçues d'un seul tenant avec l'élément de fermeture (10,11) respectif.

12. Unité de fermeture selon l'une quelconque des revendications 1 à 11, **caractérisée en ce que** les poignées (19,20) sont conçues d'un seul tenant avec la saillie (16,17) respective.

13. Unité de fermeture selon l'une quelconque des revendications 1 à 11, **caractérisée en ce que** les poignées (19,20) sont fixées sur la saillie (16,17) respective comme composant séparé.

14. Unité de fermeture selon l'une quelconque des revendications précédentes, **caractérisée en ce que** les éléments de fermeture (10,11) sont agencés sur le cadre (4) de manière mobile indépendamment l'un de l'autre.

15. Compartiment de stockage (1) pour un véhicule automobile, comprenant un bac de réception (2) pour des objets et comprenant une unité de fermeture (3) associée au bac de réception (2) pour libérer ou fermer le bac de réception (2), **caractérisé par** la conception de l'unité de fermeture (3) selon l'une quelconque des revendications précédentes.
